# EUROPEAN PATENT SPECIFICATION

(11) **EP 1 814 824 B1**
(45) Date of publication and mention of the grant of the patent: **17.12.2008**
(21) Application number: 04774947.8
(22) Date of filing: 17.09.2004
(51) Int. Cl.: C01F 7/06, C01F 7/14, C22B 21/00, B01J 8/00

(54) **METHOD AND APPARATUS FOR THE EXTRACTION OF GIBBSITE FROM BAUXITE**
VERFAHREN UND VORRICHTUNG ZUR EXTRAKTION VON GIBBSIT AUS BAUXIT
PROCEDE ET APPAREIL POUR L'EXTRACTION DE GIBBSITE A PARTIR DE BAUXITE

(43) Date of publication of application: 08.08.2007
(73) Proprietor: Alcor Technology B.V., 2343 JH Oegstgeest (NL)
(72) Inventor: DEN HOND, Roelof, NL-2343 JH Oegstgeest (NL)
(74) Representative: van Westenbrugge, Andries
(86) International application number: PCT/NL2004/000643
(87) International publication number: WO 2006/031098

(56) References cited:
- US-A- 4 426 363
- US-A- 4 994 244
- US-A- 5 545 384

## Description

The invention relates to a method for the extraction of gibbsite from bauxite comprising the mixing of bauxite solids with a caustic soda extraction liquor to obtain a first extraction feed flow, extracting gibbsite from said first extraction feed flow in a first extraction step at a temperature between 100 and 180 °C to obtain a first extraction discharge flow, separating the first extraction discharge flow into a first liquor flow and a first solids flow in a first solid-liquid separation step, crystallizing gibbsite from the first liquor flow and adding further extraction liquor to said first solids flow to obtain a second extraction feed flow, extracting gibbsite from the second extraction feed flow in a second extraction step to obtain a second extraction discharge flow, separating said second extraction discharge flow into a second liquor flow and a second solids flow in a second solid-liquid separation step.

For the extraction of gibbsite (Al₂O₃.3H₂O) from bauxite, said bauxite is mixed with a caustic soda solution as extraction liquor and the mixture is heated for extraction at a temperature between 100 and 180 °C.

The objective of the extraction process is to extract a maximum of gibbsite from the bauxite with the least possible extraction liquor; that is to maximize the dissolved alumina (Al₂O₃) concentration in the product liquor, also known as green liquor, with a minimum amount of gibbsite remaining unextracted in the bauxite residue. Maximization of the dissolved alumina concentration in the liquor is achieved by over-charging the extraction liquor with bauxite. Maximization of the extraction of gibbsite from the bauxite however, is achieved by under-charging the extraction liquor with bauxite, i.e. by over-charging the bauxite with extraction liquor.

Obviously a single extraction or digestion step results in a compromise. The alumina concentration in the discharge liquor remains below the saturation concentration and the extraction of gibbsite from bauxite is not complete. As a result of this compromise, the extraction liquor is not put to full use and the bauxite is not fully utilized. As a result, the residue in the extraction vessel, also known as digester, discharge still contains some extractable but not extracted gibbsite. Typically some 2 % of the extractable gibbsite in the bauxite is not extracted in the digester, depending on compromise conditions, which in turn are determined by alumina production costs and alumina sales price.

Digesters usually operate well above the atmospheric boiling point of the extraction liquor and the digester discharge, comprising green liquor and residue, is cooled to atmospheric boiling point by flash cooling and the flash steam so produced is used for pre-heating bauxite and extraction liquor feeding the digesters. The cooled discharge flow is directed to a solid-liquid separation step, usually carried out in settlers (also labelled thickeners or decanters), operating at a temperature which is below the atmospheric boiling point of the liquor.

Because the settler feed flow has been cooled to below atmospheric boiling point, it is super-saturated with dissolved alumina (Al₂O₃) and in the settler some gibbsite crystallizes on the residue, increasing the amount of extractable gibbsite (Al₂O₃.3H₂O) in the settler underflow solids to some 4 % of the extractable gibbsite originally present in the bauxite. This undesired crystallization process, labelled auto-precipitation, is accelerated by the presence of gibbsite in the residue solids.

The settler's underflow slurry, containing bauxite residue (also known as red mud) and adhering green liquor, is washed to recover dissolved alumina and caustic soda. The wash water, containing the recovered alumina and caustic soda, is added to the plant's liquor flow. The addition of such wash water results in a need for the evaporation of water from the process liquor in order to maintain a constant liquor volume in the process.

Additional auto-precipitation occurs in the residue wash system, further increasing the amount of extractable gibbsite in the residue to some 6 % of the extractable gibbsite originally present in the bauxite. This undesired auto-precipitation process is accelerated by the presence of gibbsite in the settler underflow solids.

The washed residue is disposed of in designated storage areas. The disposal of bauxite residue presents one of the principal environmental liabilities associated with the production of alumina.

The settler's clarified overflow liquor passes through filters for the removal of any remaining solid particles. The filtrate is further cooled, to increase the alumina super-saturation, and directed to crystallization tanks (also labelled precipitation or decomposition tanks) for the crystallization of gibbsite (Al₂O₃.3H₂O). The gibbsite crystals are washed and then calcined, at a temperature between 900 and 1200°C, and the resulting product is alumina (Al₂O₃).

The process liquor discharging from precipitation is relatively low in dissolved alumina concentration and is labelled spent liquor. The spent liquor is returned to digestion as extraction liquor for another production cycle.

The invention relates more specifically to a method and apparatus for the extraction of gibbsite from bauxite in a double digestion process, comprising mixing of bauxite with a caustic soda solution as extraction liquor and heating said mixture for a first extraction. The first extraction, or digestion, operates under conditions that are suitable for maximizing the alumina concentration in the discharge liquor which is achieved by over-charging the extraction liquor with bauxite.

The first digestion discharge is separated into a clarified liquor flow and a solids/liquor slurry flow. The slurry flow resulting from the first digestion is mixed with further extraction liquor for a second extraction. This second, further extraction operates under conditions that are suitable to maximize the extraction of gibbsite from the bauxite residue, which is achieved by under-charging the extraction liquor with bauxite residue resulting from the first digestion step.

Such a method and related apparatus are known from US Patent 4,994,244. In this patent a double extraction or double digestion is suggested under conditions that are suitable for the extraction of gibbsite.

To that end the discharge from a first extraction is separated in a first solid-liquid separation in a liquor flow and solids/liquor slurry flow at a temperature which can be either the original digestion temperature or, after some partial cooling, an intermediate temperature, which is still above the atmospheric boiling temperature of the liquor.

The slurry flow from the first solid-liquid separation is mixed with a caustic soda solution as extraction liquor and transferred to a second extraction. The discharge from the second extraction is separated in a second solid-liquid separation in a liquor flow and a solids/liquor slurry flow at a temperature which can be either the original digestion temperature or, after some partial cooling, an intermediate temperature, which is still above the atmospheric boiling temperature of the liquor.

Bauxite is mixed with the liquor flow from the second solid-liquid separation, functioning as extraction liquor, and transferred to the first extraction. The liquor flow from the first solid-liquor separation is subjected to further processing for crystallizing gibbsite. The slurry flow from the second solid-liquid separation is cooled and directed to residue washing.

In this method, the gibbsite containing solids and the extraction liquor pass in a counter current mode through the two digestion steps.

The current invention aims to provide a method and an apparatus improving the industrial applicability of such a method and apparatus respectively.

To that end, in a method as described above, said first and second solid-liquid separation steps are carried out at a temperature below the atmospheric boiling point of the extraction liquor, said second extraction feed flow is heated for the second extraction step, said second extraction step is at a temperature between 120 and 160 °C and said second liquor flow from the second solid-liquid separation is subjected to further processing for crystallizing gibbsite.

The slurry flow from the first solid-liquid separation is mixed with further caustic soda solution as extraction liquor and heated for a second extraction at a temperature between 120 and 160 °C. The discharge from the second extraction is cooled to a temperature which is below the atmospheric boiling temperature of the liquor and then separated in a second solid-liquid separation in a liquor flow and solids/liquor slurry flow.

The clarified liquor flow from the first solid-liquid separation is combined with the clarified liquor flow from the second solid-liquid separation and the total clarified liquor flow is subjected to further processing for obtaining alumina. Alternatively, the clarified liquor flow from the second solid-liquid separation can be combined with the feed flow of the first solid-liquid separation and the clarified liquor flow from the first solid-liquid separation, containing the alumina extracted in both digestion steps, is subjected to further processing for obtaining alumina.

The slurry flow from the second solid-liquid separation is preferably directed to residue washing and the washed residue is disposed of in designated storage areas.

According to a preferred embodiment of the invention, the mixture entering the second extraction step is heated by transferring heat from the discharge flow of the second extraction step. Transfer of heat is by heat exchange without transfer of substance. An example is the use of so-called spiral heat exchangers, generally known in the art and described in Chemical Engineers' Handbook by Robert H. Perry / Cecil H. Chilton.

The invention also relates to an apparatus for extracting gibbsite from bauxite comprising a first extraction vessel, a first mixer having its outlet connected to the inlet of said first extraction vessel, said mixer having an inlet for bauxite and for extraction liquor, a first solid-liquid separator, having its inlet connected to the outlet of said first extraction vessel, a second extraction vessel, a second mixer having its outlet connected to the inlet of said second extraction vessel, said second mixer having an inlet connected to the solids outlet of said first solid-liquid separator and to a feed line for further extraction liquor, a second solid-liquid separator, having its inlet connected to the outlet of said second extraction vessel, wherein heating equipment is installed between the outlet of said second mixer and the inlet of said second extraction vessel.

The first extraction unit constitutes any single extraction digestion technology, comprising digester vessel(s), facilities for heating the feed flow to digestion temperature and for cooling the discharge flow to a temperature which is below the atmospheric boiling point of the liquor. The first solid-liquid separator constitutes any suitable solid-liquid separation technology, including cyclones and settlers.

The inventive apparatus for the second extraction unit comprises digester vessel(s), facilities for heating the feed flow to digestion temperature and for cooling the discharge flow to a temperature which is below the atmospheric boiling temperature of the liquor. The second solid-liquid separator constitutes any suitable solid-liquid separation technology, including cyclones and settlers.

The inventive apparatus for carrying out the second extraction step of the novel method preferably uses spiral heat exchangers for continuous counter current heat exchange between the feed and discharge flow of the extraction vessel of the second extraction unit. A spiral heat exchanger transfers heat without the transfer of substance and has a much better thermal efficiency than the conventional flash vessel - heater system, using flash steam as intermediate material for heat transfer. It should be noted however that the conventional flash vessel - heater system has the benefit of evaporating water from the process through the release of flash steam.

The inventive apparatus for carrying out the second extraction step is also suitable for the first extraction step of the novel method and for the conventional single digestion step method. In both applications the inventive apparatus would be combined with a separate, high efficiency evaporator to compensate for the loss in evaporation capacity resulting from the absence of a conventional flash vessel - heater system for heat transfer.

In contrast with the prior art (US Patent 4,994,244 ) the inventive method solves the digestion compromise by improving on the conventional single step digestion method, by operating this step as first extraction step under conditions for high liquor alumina concentration. The novel method subsequently charges the residue of the first step to a second, further digestion step, operating under conditions suitable for maximum extraction of gibbsite from the residue.

Also in sharp contrast with the method of US patent 4,994,244, which is prescriptive with respect to the method used for the first digestion step, the novel method is extremely suitable to upgrade existing refineries that use so-called low temperature digestion units for the extraction of gibbsite (Al₂O₃.3H₂O) from bauxite, as illustrated by the various embodiments of the invention. Currently all such refineries use a single step digestion method. Following upgrade, an existing low temperature digestion unit operates as first or main digestion step under conditions that are suitable for maximizing the alumina concentration in the discharge flow (green liquor). A typical digestion temperature is 145 °C, with industrial practice ranging from 100 °C (atmospheric digestion) to 180 °C (pressure digestion).

The newly added low temperature digestion unit serves as second, further digestion step under conditions that are suitable for maximizing the extraction of gibbsite from bauxite. The temperature of the second, further extraction ranges from 120 to 160 °C.

The upgrade increases the production capacity of the existing, first or main digestion unit because of the increased alumina concentration in its green liquor discharge flow. At the same moment, the added second, further digestion unit also produces a green liquor flow, providing an additional increase in digestion production capacity. The production of two green liquor flows presents a distinct difference with US Patent 4,994,244, where gibbsite containing solids and extraction liquor pass in a counter current mode through the two digestion steps, resulting in only one green liquor flow.

The two green liquor flows, combined or separately, are preferably directed through filters for the removal of any remaining solid particles. The filtered green liquor is preferably further cooled, to increase alumina super-saturation, and is subsequently directed to crystallization tanks (also known as precipitation or decomposition tanks) for the crystallization of gibbsite (Al₂O₃.3H₂O). The gibbsite crystals are washed and then calcined to produce alumina (Al₂O₃).

The second, further digestion step improves the extraction of the gibbsite present in the bauxite. Hence as a result of the refinery upgrade bauxite consumption per tonne alumina produced is typically reduced by some 4 % and the residue generation per tonne alumina produced is typically reduced by some 8 %, resulting in economic and environmental benefits.

Since the bauxite residue charged to the second digestion step has a relatively low gibbsite content, only a relatively small flow of spent liquor is needed to extract this gibbsite. Also the alumina production increase resulting from the second digestion step is relatively small, typically some 4 % of the alumina production resulting from the first digestion step.

The cost of the additional alumina produced in the second digestion step benefits from the absence of bauxite related costs. Also residue disposal costs of the total plant are reduced, resulting in a production cost discount for the additional alumina produced.

The implementation of the second digestion step reduces a refinery's residue production and hence residue wash water intake. The resulting reduction in evaporation requirement favours the use of a second digestion step without a flash vessel - heater system. Instead a spiral heat exchanger system can be advantageously used for the exchange of heat between the feed and discharge flow of the second digestion.

Spiral heat exchangers, transferring heat without the transfer of substance, have a much higher efficiency for heat exchange between digester feed and discharge flow than the conventional flash vessel - heater system, using flash steam as intermediate material for heat transfer between digestion discharge and feed flows, resulting in very significant costs savings.

Contrary to cooling in conventional flash tanks, spiral heat exchangers are very suitable for cooling the very dense slurry flow discharging from the second digestion unit. Hence the use of spiral heat exchangers allows for the second solid-liquid separation to be carried out below atmospheric boiling point, resulting in capital cost savings compared with solid-liquid separation above atmospheric boiling point and consequently above atmospheric pressure.

Another important benefit of the use of a spiral heat exchanger system is that significantly less equipment is needed compared to a flash vessel - heater system, and the modest area requirement facilitates the upgrade of existing single step digestion technology to the novel digestion method and the novel digestion apparatus.

The invention will be further described with reference to the enclosed drawings, wherein:
Fig. 1 shows a typical method for extraction of Al₂O₃.3H₂O from bauxite according to current practice;
Fig. 2 shows a typical method for extraction of Al₂O₃.3H₂O from bauxite according to the invention;
Fig. 3 shows heat exchange in a prior art device;
Fig. 4 shows heat exchange according to a preferred embodiment of the invention;
Fig. 5 shows a first embodiment of the invention;
Fig. 6 shows a second embodiment of the invention; and
Fig. 7 shows a third embodiment of the invention.

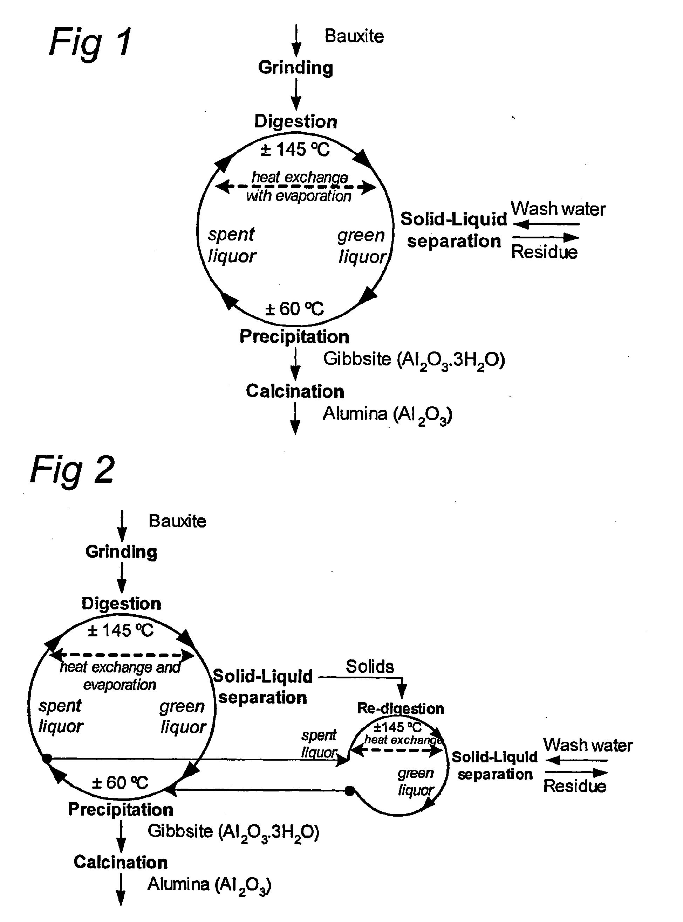

Most alumina refineries produce alumina from bauxite (the aluminous ore) by the Bayer process, which is depicted in Figure 1. In the Bayer process ground bauxite and a caustic soda solution with a low dissolved alumina concentration (spent liquor) as extraction liquor are mixed and heated to extract gibbsite (Al₂O₃.3H₂O) from the bauxite. The extraction reaction takes place in reactor vessels, often known as digesters. The discharge from the digesters contains a mixture of solid bauxite residue and a caustic soda solution with a high dissolved alumina concentration (green liquor). The discharge is added to a solid-liquid separation step. The solid residue is, after washing, disposed of. The green liquor passes through filters for the removal of any remaining solid particles. The filtrate is further cooled, to increase the alumina super-saturation, and is directed to precipitation tanks for the crystallization of gibbsite (Al₂O₃.3H₂O). The gibbsite crystals are washed and then calcined, at a temperature between 900 and 1200 °C, to produce alumina (Al₂O₃).

The process liquor has a high temperature end at digestion, facilitating the gibbsite extraction process, and a low temperature end at precipitation, facilitating the gibbsite crystallization process. Heat exchange between the digestion discharge and feed flows takes care of most of the energy needed to reach digestion temperature and thus reduces the consumption of external energy.

Figure 2 shows the inventive method where, compared to Figure 1, a second, redigestion step and a second solid-liquid separation step have been added between the first solid-liquid separation step and the residue washing system. In each digestion step the feed and discharge flow exchange heat.

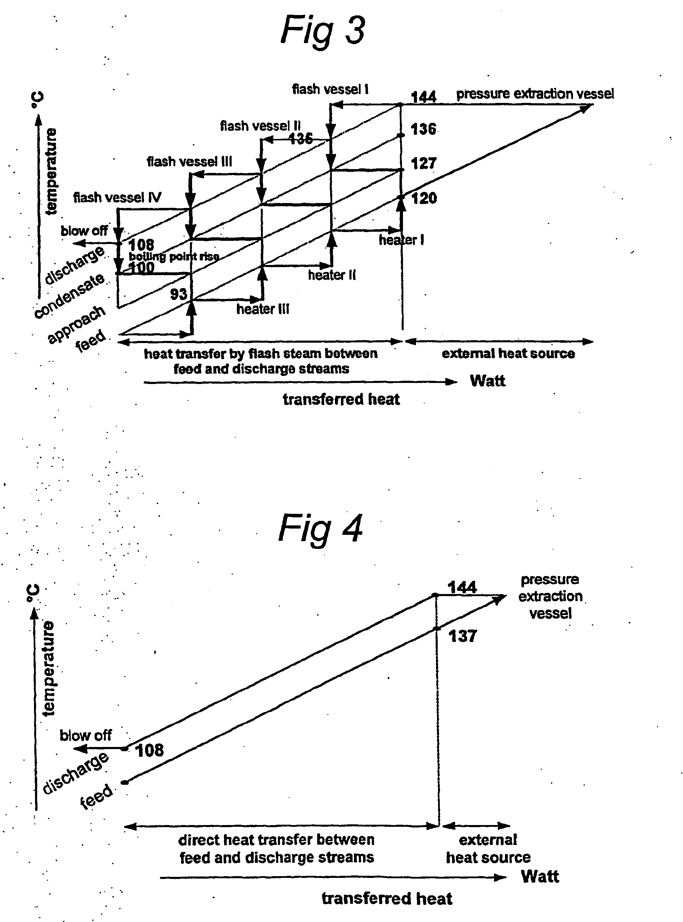

In Figure 3 the exchange of heat in a conventional flash tank - heater system according to the prior art is depicted. In this example a number of flash vessels I to IV is provided downstream of the pressure extraction vessel. In each flash vessel the pressure and temperature of the extraction vessel discharge flow is somewhat reduced and the generated flash steam is used to transfer heat, increasing the temperature of the extraction vessel feed flow passing through the heaters.

Figure 3 shows that the exchange of heat between the extraction vessel's feed flow and the extraction vessel's discharge flow is in steps rather than continuous. The liquor in the discharge flow has a boiling point rise and the flash steam condenses at a temperature which is some 8 °C lower than the temperature of the liquor discharging from the flash tank. As a result of the stepwise heat transfer and the liquor boiling point rise, the temperature in the digestion feed flow leaving heater I is, in this example, 120 °C and an additional 24 °C heating with external heat is needed to reach the extraction temperature of 144 °C.

Figure 4 shows the situation wherein spiral heat exchangers are used, as proposed according to the invention. Through the use of such heat exchangers the temperature of the discharge flow of the extraction vessel is gradually decreased whilst the temperature of the feed flow is gradually increased. As a result of gradual heat transfer and the absence of the transfer of flash steam and associated boiling point rise effect, the transfer of heat is much more efficient. As a result, the digester feed flow leaving the spiral heat exchanger is, in this example, 137 °C. As a result only 7 °C heating with external heat is needed to reach the extraction temperature of 144 °C.

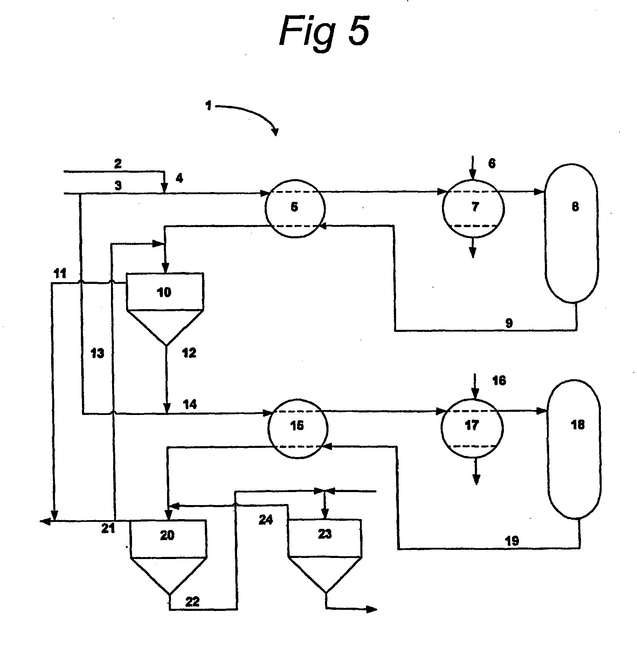

In Figure 5, a first embodiment of the method and the apparatus according to the invention is shown. The apparatus is generally referred to by 1. The apparatus comprises a feed 2 for bauxite slurry. Also the feed 3 for extraction liquor, a caustic soda solution with a low dissolved alumina concentration, is shown. The feed flows 2 and 3 are mixed at mixer 4.

At 5 a first spiral heat exchanger is shown. (It will be understood that such a spiral heat exchanger can be embodied as two or more spiral heat exchangers being directly connected behind each other and/or in parallel). At one side thereof the mixture from mixer 4 is conveyed, in the direction of the arrow, for heating whilst on the other side thereof a flow of material is cooled. In the spiral heat exchanger(s) there is a complete isolation of both substances moving in counter current flow. At 7 a further heat exchanger is shown wherein the mixture from mixer 4 is further heated for example to 145 C. Heating is carried out by passing a flow 6 of steam or hot liquid, such as water through heat exchanger 7. At 8 a first pressure extraction vessel is shown. (It will be understood that such a vessel can be embodied as two or more vessels being directly connected behind each other in series). The discharge 9 thereof is guided through the other side of heat exchanger 5. Downstream of this heat exchanger a solid-liquid separator 10 is provided, operating below atmospheric boiling point.

The clarified liquor leaves the solid-liquid separator at 11, the residue solids leave at 12. The residue solids flow 12 is mixed at mixer 14 with a further flow 13 of caustic soda solution serving as extraction liquor.

At 15 another spiral heat exchanger is shown. (It will be understood that such a spiral heat exchanger can be embodied as two or more spiral heat exchangers being directly connected behind each other and/or in parallel). At one side thereof the mixture from mixer 14 is conveyed, in the direction of the arrow, for heating whilst on the other side thereof a flow of material is cooled. In the spiral heat exchanger(s) there is a complete isolation of both substances moving in counter current flow. At 17 a further heat exchanger is shown wherein the mixture from mixer 14 is further heated for example to about 143°C. Heating is carried out by passing a flow 16 of steam or hot liquid, such as water through heat exchanger 17. At 18 a further pressure extraction vessel is shown. (It will be understood that such a vessel can be embodied as two or more vessels being directly connected behind each other in series). The discharge 19 thereof is guided through the other side of the spiral heat exchanger 15: Downstream of the heat exchanger a further solid-liquid separator 20 is provided, operating below atmospheric boiling point

The clarified liquor leaves the solid-liquid separator at 21, the residue solids leave at 22. The residue solids flow 22 from solid-liquid separator 20 is directed to residue washing, indicated by 23. The wash water discharging from the wash system, flow 24, is added to 20.

The clarified liquor flows 11 and 21, containing the alumina extracted from the bauxite respectively the bauxite residue, are, separately or combined, subjected to further processing for obtaining alumina.

Alternatively, the clarified liquor flow 21 can be combined with the feed flow of the first solid-liquid separation 10 as is shown by the dotted line and the clarified liquor flow 11 from the first solid-liquid separation, containing the alumina extracted in both digestion steps, is subjected to further processing for obtaining alumina.

It will be understood that separator 10 or 20 or both can comprise one or more settlers operating in parallel (collecting all bauxite residue) or one or more sand separators operating in parallel (collecting the coarser part of the residue) followed by one or more settlers operating in parallel (collecting the finer part of the residue).

In the apparatus described above the conditions in first pressure extraction vessel 8 are chosen to maximize the alumina concentration in discharge flow 9 within economic and other applicable constraints. In the further pressure extraction vessel 18 conditions are chosen to maximize the extraction of gibbsite from the bauxite.

In the apparatus described above, the output and efficiency of the process can be improved over the prior art.

Through the use of spiral heat exchangers (5,15) in the apparatus described above, the temperature of the discharge flow of either one of the pressure extraction vessels is gradually decreased whilst the temperature of the feed flow to either one of the extraction vessel is gradually increased. As a result of the gradual heat exchange and the absence of the transfer of flash steam and its associated boiling point rise effect, the exchange of heat is much more efficient, resulting in a lower addition of external energy compared with the prior art, as is elucidated in Figures 3 and 4.

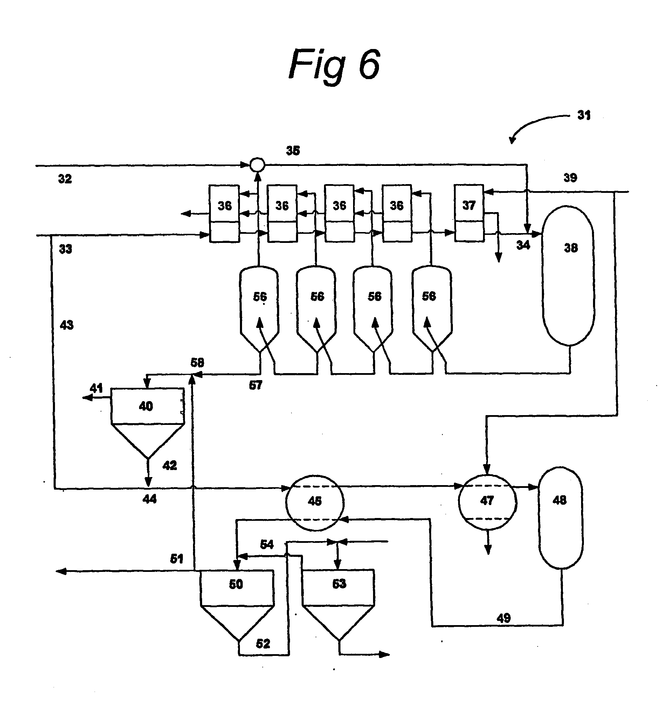

In Figure 6 a further embodiment of the method and apparatus according to the invention is shown and is generally referred to by 31. Bauxite slurry is entered at 32 and heated at 35, with flash steam from flash tank 56, before entering a mixer at 34. To the mixer extraction liquor 33 is added, which is separately heated with flash steam, from flash tanks 56, in a series of liquor heaters 36. Because it is not possible to heat the extraction liquor 33 sufficiently in this way, an additional heater 37 is provided, to which live steam 39 is added. Bauxite slurry and extraction liquor are mixed at 34 and the mixture enters the first pressure extraction vessel 38 operating at a temperature of, for example 144 °C. The discharge thereof is guided through a number of flash tanks 56. In the flash tanks the pressure of the discharge flow of the first pressure extraction vessel is decreased in steps and the generated flash steam is used in heat exchangers 36. In this way both the temperature and the water content of the discharge of the first pressure extraction vessel decreases in steps. The temperature of the extraction liquor, starting from 33, will increase in steps. The product 57 from the last flash tank is fed to a solid-liquid separator 40 operating below atmospheric boiling point.

As in the previous embodiment the clarified liquor flow 41 is used for further processing to obtain alumina. The residue solids are discharged at 42.

The residue solids are mixed with an additional feed of extraction liquor 43 at mixer 44 and the mixture is added to spiral heat exchangers 45 and 47. A further pressure extraction vessel 48 is provided, the discharge 49 of which, at a temperature of for example 144 °C, is transferred to heat exchanger 45 and entered into a solid-liquid separator 50 operating below atmospheric boiling point.

The clarified liquor flow 51 is subjected to further processing for obtaining alumina. An alternate arrangement is to mix flow 51 and 57 at mixer 58 and to add the mixture to settler 40. This way the overflow 41 of settler 40 contains the alumina extracted in both digestion steps. The solids flow 52 from the solid-liquid separator 50 is directed to residue washing, indicated by 53. The wash water discharging from the wash system, flow 54, is added to 50.

The second part of the process i.e. after the first solid-liquid separation device 40 corresponds to the second part of the embodiment shown in Figure 5. The first part, i.e. the preheating of the mixture added to the first pressure extraction device and the cooling of the discharge of the first pressure extraction vessel, is different from that shown in Figure 5 because flash steam is used for the transfer of heat between feed and discharge stream of extraction vessel 38.

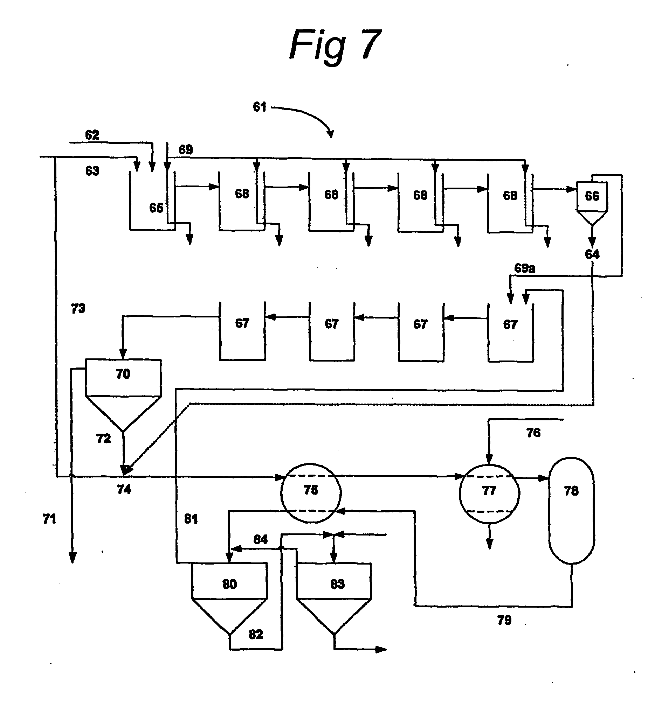

In Figure 7 a further embodiment is shown, generally referred to by 61. The first extraction tank comprises a number of tanks 68 connected in series and being at atmospheric pressure. The mixing of extraction liquor (63) and bauxite slurry (62) is realized in a single step at 65. The mixture is heated by means of external steam (69). More external steam is added to tanks 68 to keep the temperature just below atmospheric boiling point, for example 106 °C.

Upstream from the solid-liquid separator 70 and downstream from the series of first extraction vessels a sand separator 66 is provided. The sand separator 66 removes the coarse residue fraction 64 from the main slurry flow. It is optional to reject the sand or to add the sand to mixer 74 for the extraction of remaining gibbsite in the second, further digestion step.

The main slurry flow 69a, discharging from the sand separator and combining liquor and fine residue solids, is added to the first desilication tank, together with the overflow 81 of solid-liquid separator 80. The combined flows pass through a series of atmospheric desilication tanks 67 where silica, dissolved in the liquor, crystallizes mostly on the fine residue solids. The slurry from the last desilication tank is added to solid-liquid separator 70, operating below atmospheric boiling point.

The clarified liquor leaves the solid-liquid separator at 71 for further processing for obtaining alumina. The bauxite residue solids leave at 72.

The residue solids flow is mixed at 74 with extraction liquor 73 and, optionally, with sand 64. This mixture is heated in spiral heat exchanger 75, by the heat in the discharge from the further pressure extraction vessel 78, and is further heated by hot water, Dowtherm or steam 76 at heater 77. The discharge 79 from the further pressure extraction vessel, for example at a temperature of 130 °C, is cooled in spiral heat exchanger 75. The cooled discharge is fed to solid-liquid separator 80, operating below atmospheric boiling point.

In case the sand, collected in sand separator 66, is added to mixer 74, whilst it is desired to keep the sand out solid-liquid separator 80, the sand is separated from stream 79 by another sand separator, which is installed between the discharge of heater 75 and the feed to solid-liquid separator 80.

The clarified liquor discharge 81 of solid-liquid separator 80 is returned to the first desilication tank 67 and then passes through solid-liquid separator 70. As such the clarified liquor discharge 71 of separator 70 combines the alumina extracted in the first and in the second digest. The solids flow 82 from the solid-liquid separator 80 is directed to residue washing, indicated by 83. The wash water discharging from the wash system, flow 84, is added to 80.

Example I: In the embodiment shown in Figure 5, a slurry flow passes from mixer 4 through one side of spiral heat exchanger 5. The slurry discharges at a temperature of 135 °C. The slurry is further heated with steam or hot water in heat exchanger 7 before entering the first pressure extraction vessel 8. The holding time of the slurry in the extraction vessel is 45 minutes. The extraction vessel's discharge has a flow rate of 950 kl/h, is at a temperature of 145 °C, has a dissolved alumina concentration A = 190 g/l and a caustic concentration C = 270 g/l (expressed as sodium carbonate, Na₂CO₃). The discharge flow 9 passes through the other side of spiral heat exchanger 5 into settler 10, operating at a temperature of 105 °C, which is below the atmospheric boiling point of the liquor.

The clarified liquor overflow 11 of the settler is further processed to obtain alumina. The residue solids discharge at 12 as a slurry with a solids concentration of 30 % (by weight). The gibbsite content in the underflow solids is 4 % of the original gibbsite content of the bauxite.

The residue slurry 12 is mixed at 14 with a caustic soda flow of 80 kl/h and the resulting slurry flow is heated on one side of spiral heat exchanger 15 to a temperature of 135 °C. The slurry is further heated with hot water in heat exchanger 17 before entering the extraction vessel 18. The holding time of the slurry in extraction vessel 18 is 10 minutes. The extraction vessel's discharge has a flow rate of 271 kl/h, is at a temperature of 143 °C, has a dissolved alumina concentration A = 165 g/l and a caustic concentration C = 264 g/l (expressed as sodium carbonate). The discharge flow 19 passes through the other side of spiral heat exchanger 15 into settler 20, operating at a temperature of 100 °C.

The clarified liquor discharge 21 of settler 20 is further processed to obtain alumina. The gibbsite content of the residue solids discharging from the settler at 22 is 0.5 % of the original gibbsite content of the bauxite.

Example II: In the embodiment shown in Figure 6, a liquor flow is pre-heated in heaters 36 by flash steam, released by flash vessels 56, to a temperature of 120 °C followed by final heating in heater 37 with boiler steam. A bauxite slurry flow is heated at 35, with flash steam. The hot bauxite slurry and the hot liquor are mixed at 34 and the mixture is added to the first pressure extraction vessel 38. The holding time of the slurry in the extraction vessel is 60 minutes. The extraction vessel's discharge has a flow rate of 2245 kl/h, is at a temperature of 144 °C, has a dissolved alumina concentration A = 172 g/l and a caustic concentration C = 250 g/l (expressed as sodium carbonate). The discharge flow passes through flash tanks 56 where the flow is cooled, by the release of flash steam. The discharge of the last flash vessel is added to settler 40 operating at a temperature of 106 °C, which is below the atmospheric boiling point of the liquor.

The clarified liquor discharge 41 of the settler is further processed to obtain alumina. The residue discharges from the settler at 42 as a slurry with a solids concentration of 43 % (by weight). The gibbsite content in the residue solids is 4.5 % of the original gibbsite content of the bauxite.

The residue slurry 42 is mixed at 44 with a caustic soda flow 43 of 150 kl/h and the resulting slurry flow is heated on one side of spiral heat exchanger 45 to a temperature of 137 °C. The slurry is further heated with steam in spiral heat exchanger 47 before entering the further extraction vessel 48. The holding time of the slurry in extraction vessel 48 is 18 minutes. The extraction vessel's discharge has a flow rate of 615 kl/h, is at a temperature of 144 °C, has a dissolved alumina concentration A = 150 g/l and a caustic concentration C = 239 g/l (expressed as sodium carbonate). The discharge flow 49 passes through the other side of spiral heat exchanger 45 into settler 50, operating at a temperature of 100 °C.

The clarified liquor discharge flow 51 of settler 50 is added to mixer 58 and as a result, the discharge 41 of separator 40 combines the alumina extracted in the first and in the further, second digestion steps. The gibbsite content of the residue solids discharging from the settler at 52 is 0.7 % of the original gibbsite of the bauxite.

Example III: In the embodiment shown in Figure 7, a slurry flow passes from tank 65 through a series of atmospheric extraction tanks 68 operating at a temperature of 106 °C. The total holding time of the slurry in the extraction vessels is 200 minutes. The discharge of the last vessel 68 has a flow rate of 800 kl/h, is at a temperature of 106 °C, has a dissolved alumina concentration A = 202 g/l and a caustic concentration C = 320 g/l (expressed as sodium carbonate). The discharge of the last extraction vessel is added to sand separator 66 to remove the coarse residue 64.

The main slurry flow 69a discharging from the sand separator, combining liquor and fine residue solids, is added to the first desilication tank 67, together with the clarified overflow 81 of settler 80. The combined flow passes through a series of atmospheric desilication tanks where silica, dissolved in the liquor, crystallizes on the fine residue solids. The slurry from the last desilication tank is added to settler 70, operating at a temperature of 105 °C, which is below the atmospheric boiling point of the liquor.

The clarified liquor overflow 71 of the settler is further processed for obtaining alumina. The residue solids discharge from the settler at 72 as a slurry with a solids concentration of 25 % (by weight). The gibbsite content in the underflow solids is 5.0 % of the original gibbsite content of the bauxite.

The residue slurry 72 is mixed at 74 with a caustic soda flow of 40 kl/h and the resulting slurry flow is heated on one side of spiral heat exchanger 75 to a temperature of 120 °C. The slurry is further heated with hot water in spiral heat exchanger 77, before entering the further extraction vessel 78. The holding time of the slurry in extraction vessel 78 is 40 minutes. The extraction vessel's discharge has a flow rate of 276 kl/h, is at a temperature of 130 °C, has a dissolved alumina concentration A = 163 g/l and a caustic concentration C = 273 g/l (expressed as sodium carbonate). The discharge flow 79 passes through the other side of spiral heat exchanger 75 into settler 80, operating at a temperature of 100 °C.

The clarified liquor overflow 81 of the settler 80, containing the alumina extracted in the second digest, is added to the first desilication tank 67 together with the main slurry flow 69a discharging from the sand separator. The combined flow passes through the series of desilication tanks and is then added to solid-liquid separator 70. As such the clarified liquor discharge 71 of separator 70 combines the alumina extracted in the first and in the further, second digest. The gibbsite content of the residue solids discharging from the settler at 82 is 0.7 % of the original gibbsite content of the bauxite.

Although the invention has been described above referring to preferred embodiments the person skilled in the art will immediately understand that variants thereof are possible and within the range of the appended claims.

## Claims

1. Method for the extraction of gibbsite from bauxite comprising the mixing of bauxite solids with a caustic soda extraction liquor to obtain a first extraction feed flow, extracting gibbsite from said first extraction feed flow in a first extraction step at a temperature between 100 and 180 °C to obtain a first extraction discharge flow, separating the first extraction discharge flow into a first liquor flow and a first solids flow in a first solid-liquid separation step, crystallizing gibbsite from the first liquor flow and adding further extraction liquor to said first solids flow to obtain a second extraction feed flow, extracting gibbsite from the second extraction feed flow in a second extraction step to obtain a second extraction discharge flow, separating said second extraction discharge flow into a second liquor flow and a second solids flow in a second solid-liquid separation step, **characterised in that** said first and second solid-liquid separation steps are carried out at a temperature below the atmospheric boiling point of the extraction liquor, said second extraction feed flow is heated for the second extraction step, said second extraction step is at a temperature between 120 and 160 °C and said second liquor flow from the second solid-liquid separation is subjected to further processing for crystallizing gibbsite.

2. Method according to claim 1, wherein the second extraction discharge flow is cooled by exchanging heat with the second extraction feed flow.

3. Method according to any one of claims 1 to 2, wherein the cooling of the second extraction discharge flow is effected by heat exchange without the transfer of substance.

4. Method according to one of the preceding claims, wherein the second extraction discharge flow is brought in continuous counter current heat exchange with the second extraction feed flow, wherein said flows are fully separated from each other.

5. Method according to one of the preceding claims, wherein the second extraction feed flow is first heated to a first temperature level by recovering heat from the second extraction discharge flow and subsequently heated to a second temperature level, by heat from an external heat source, wherein the difference between said temperature levels is less than 25 °C, preferably less than 20 °C, more preferably less than 15 °C, and most preferably less than 10 °C.

6. Method according to one of the preceding claims, wherein the second liquor flow is mixed with the first liquor flow.

7. Method according to one of the preceding claims wherein the second liquor flow is mixed with the first extraction discharge flow.

8. Method for the production of alumina by calcination of gibbsite, at a temperature between 900 and 1200 °C, wherein said calcination is carried out on gibbsite, crystallized from the second liquor flow produced by a method according to any one of the preceding claims.

9. Apparatus (1, 31, 61) for extracting gibbsite from bauxite comprising a first extraction vessel (8, 38, 68), a first mixer (4, 34, 65) having its outlet connected to the inlet of said first extraction vessel, said mixer having an inlet for bauxite and for extraction liquor, a first solid-liquid separator (10, 40, 70), having its inlet connected to the outlet of said first extraction vessel, a second extraction vessel (18, 48, 78), a second mixer (14, 44, 74) having its outlet connected to the inlet of said second extraction vessel, said second mixer having an inlet connected to the solids outlet of said first solid-liquid separator and to a feed line for further extraction liquor (13, 45, 75), a second solid-liquid separator (20, 50, 80) having its inlet connected to the outlet of said second extraction vessel, wherein heating equipment (15, 17; 45, 47; 75, 77) is installed between the outlet of said second mixer (14, 44, 74) and the inlet of said second extraction vessel, said apparatus including a heat exchanger (15, 45, 75) having one flow path between the outlet of said second extraction vessel and the inlet of said second solid-liquid separator, the other flow path of the heat exchanger being upstream from the inlet of said second extraction vessel, **characterized in that** said heat exchanger is arranged to exchange heat between said one and other flow path in a way which is continuous, counter current without transferral of substance.

10. Apparatus according to claim 9, including a heat exchanger having one flow path between the outlet of said first extraction vessel and the inlet of said first solid-liquid separator, the other flow path of the heat exchanger being upstream from the inlet of said first extraction vessel, wherein said heat exchanger (5) is arranged to exchange heat between said one and other flow path in a way which is continuous, counter current without transferral of substance.

11. Apparatus to claim 9 or 10, wherein said heat exchanger is a spiral heat exchanger..

12. Apparatus according to any of the claims 9-11, where said first solid-liquid separator is an atmospheric vessel.

13. Apparatus according to any of the claims 9-12, where said first solid-liquid separator is a two-step separator, the first step designed to remove coarse residue and the second step designed to remove fine residue, where the second step is an atmospheric vessel.

14. Apparatus according to any of the claims 9-13, where said second solid-liquid separator is an atmospheric vessel.

15. Apparatus according to any of the claims 9-14, where said second solid-liquid separator is a two-step separator, the first step designed to remove coarse residue and the second step designed to remove fine residue, where the second step is an atmospheric vessel.

## Patentansprüche

1. Verfahren zur Extraktion von Gibbsit aus Bauxit, umfassend das Mischen von Bauxitfeststoffen mit einer Ätznatron-Extraktionsflüssigkeit, um einen ersten Extraktionszufluss zu erhalten, Extrahieren von Gibbsit aus diesem ersten Extraktionszufluss in einem ersten Extraktionsschritt bei einer Temperatur zwischen 100 und 180 °C um einen ersten Extraktionsabfluss zu erhalten, Trennen des ersten Extraktionsabflusses in einen ersten Flüssigkeitsfluss und einen ersten Feststofffluss in einem ersten Feststoff-Flüssigkeits-Trennschritt, Kristallisieren von Gibbsit aus dem ersten Flüssigkeitsfluss und Zugeben weiterer Extraktionsflüssigkeit zu diesem ersten Feststofffluss, um einen zweiten Extraktionszufluss zu erhalten, Extrahieren von Gibbsit aus dem zweiten Extraktionszufluss in einem zweiten Extraktionsschritt, um einen zweiten Extraktionsabfluss zu erhalten, Trennen dieses zweiten Extraktionsabflusses in einen zweiten Flüssigkeitsfluss und einen zweiten Feststofffluss in einem zweiten Feststoff-Flüssigkeits-Trennschritt, **dadurch gekennzeichnet, dass** dieser erste und zweite Feststoff-Flüssigkeits-Trennschritt bei einer Temperatur durchgeführt wird, die unterhalb des Siedepunkts der Extraktionsflüssigkeit bei Atmosphärendruck liegt, dass dieser zweite Extraktionszufluss für den zweiten Extraktionsschritt erhitzt wird, dass dieser zweite Extraktionsschritt bei einer Temperatur zwischen 120 und 160°C erfolgt und dass dieser zweite Flüssigkeitsfluss aus der zweiten Feststoff-Flüssigkeits-Trennung einer weiteren Verarbeitung zum Kristallisieren von Gibbsit unterzogen wird.

2. Verfahren gemäß Anspruch 1, wobei der zweite Extraktionsabfluss durch Wärmeaustausch mit dem zweiten Extraktionszufluss gekühlt wird.

3. Verfahren gemäß einem der Ansprüche 1 bis 2, wobei die Kühlung des zweiten Extraktionsabflusses durch Wärmeaustausch ohne Übertragung von Substanz erfolgt.

4. Verfahren gemäß einem der vorangehenden Ansprüche, wobei der zweite Extraktionsabfluss in kontinuierlichen Gegenstromwärmeaustausch mit dem zweiten Extraktionszufluss gebracht wird, wobei Ab- und Zufluss völlig voneinander getrennt sind.

5. Verfahren gemäß einem der vorangehenden Ansprüche, wobei der zweite Extraktionszufluss zunächst durch Rückgewinnung von Wärme aus dem zweiten Extraktionsabfluss auf ein erstes Temperaturniveau erhitzt wird und anschließend durch Wärme von einer externen Wärmequelle auf ein zweites Temperaturniveau erhitzt wird, wobei der Unterschied zwischen diesen Temperaturniveaus weniger als 25 °C, vorzugsweise weniger als 20 °C, weiter bevorzugt weniger als 15 °C und am meisten bevorzugt weniger als 10 °C beträgt.

6. Verfahren gemäß einem der vorangehenden Ansprüche, wobei der zweite Flüssigkeitsfluss mit dem ersten Flüssigkeitsfluss gemischt wird.

7. Verfahren gemäß einem der vorangehenden Ansprüche, wobei der zweite Flüssigkeitsfluss mit dem ersten Extraktionsabfluss gemischt wird.

8. Verfahren zur Herstellung von Aluminiumoxid durch Kalzinieren von Gibbsit bei einer Temperatur zwischen 900 und 1200 °C, wobei dieses Kalzinieren an Gibbsit erfolgt, der aus dem zweiten Flüssigkeitsfluss kristallisiert wird, der durch ein Verfahren gemäß einem der vorangehenden Ansprüche hergestellt wird.

9. Vorrichtung (1, 31, 61) zur Extraktion von Gibbsit aus Bauxit, umfassend ein erstes Extraktionsgefäß (8, 38, 68), einen ersten Mischer (4, 34, 65), dessen Auslass mit dem Einlass dieses ersten Extraktionsgefäßes verbunden ist, wobei dieser Mischer einen Einlass für Bauxit und für Extraktionsflüssigkeit aufweist, eine erste Feststoff-Flüssigkeits-Trennvorrichtung (10, 40, 70), deren Einlass mit dem Auslass dieses ersten Extraktionsgefäßes verbunden ist, ein zweites Extraktionsgefäß (18, 48, 78), einen zweiten Mischer (14, 44, 74), dessen Auslass mit dem Einlass dieses zweiten Extraktionsgefäßes verbunden ist, wobei dieser zweite Mischer einen Einlass aufweist, der mit dem Feststoffauslass dieser ersten Feststoff-Flüssigkeits-Trennvorrichtung und einer Zufuhrleitung für weitere Extraktionsflüssigkeit (13, 45, 75) verbunden ist, eine zweite Feststoff-Flüssigkeits-Trennvorrichtung (20, 50, 80), deren Einlass mit dem Auslass dieses zweiten Extraktionsgefäßes verbunden ist, wobei Beheizungsanlagen (15, 17; 45, 47; 75, 77) zwischen dem Auslass dieses zweiten Mischers (14, 44, 74) und dem Einlass dieses zweiten Extraktionsgefäßes angebracht sind, wobei diese Vorrichtung einen Wärmetauscher (15, 45, 75) enthält, der einen Durchflussweg zwischen dem Auslass dieses zweiten Extraktionsgefäßes und dem Einlass dieser zweiten Feststoff-Flüssigkeits-Trennvorrichtung aufweist, wobei der andere Durchflussweg des Wärmetauschers sich stromaufwärts von dem Einlass dieses zweiten Extraktionsgefäßes befindet, **dadurch gekennzeichnet, dass** dieser Wärmetauscher derart angeordnet ist, dass er Wärme zwischen dem einen und dem anderen Durchflussweg auf eine Weise austauscht, die kontinuierlich und im Gegenstrom ohne Übertragung von Substanz erfolgt.

10. Vorrichtung gemäß Anspruch 9, die einen Wärmetauscher enthält, welcher einen Durchflussweg zwischen dem Auslass dieses ersten Extraktionsgefäßes und dem Einlass dieser ersten Feststoff-Flüssigkeits-Trennvorrichtung aufweist, wobei der andere Durchflussweg des Wärmetauschers sich stromaufwärts von dem Einlass dieses ersten Extraktionsgefäßes befindet, wobei dieser Wärmetauscher (5) derart angeordnet ist, dass er Wärme zwischen dem einen und dem anderen Durchflussweg auf eine Weise austauscht, die kontinuierlich und im Gegenstrom ohne Übertragung von Substanz erfolgt.

11. Vorrichtung gemäß Anspruch 9 oder 10, wobei dieser Wärmetauscher ein Spiralwärmeaustauscher ist.

12. Vorrichtung gemäß einem der Ansprüche 9-11, wobei diese erste Feststoff-Flüssigkeits-Trennvorrichtung ein Gefäß bei Atmosphärendruck ist.

13. Vorrichtung gemäß einem der Ansprüche 9-12, wobei diese erste Feststoff-Flüssigkeits-Trennvorrichtung eine Zwei-Schritt-Trennvorrichtung ist, wobei der erste Schritt vorgesehen ist, groben Rückstand zu entfernen, und der zweite Schritt vorgesehen ist, feinen Rückstande zu entfernen, wobei der zweite Schritt ein Gefäß bei Atmosphärendruck ist.

14. Vorrichtung gemäß einem der Ansprüche 9-13, wobei diese zweite Feststoff-Flüssigkeits-Trennvorrichtung ein Gefäß bei Atmosphärendruck ist.

15. Vorrichtung gemäß einem der Ansprüche 9-14, wobei diese zweite Feststoff-Flüssigkeits-Trennvorrichtung eine Zwei-Schritt-Trennvorrichtung ist, wobei der erste Schritt vorgesehen ist, groben Rückstand zu entfernen, und der zweite Schritt vorgesehen ist, feinen Rückstand zu entfernen, wobei der zweite Schritt ein Gefäß bei Atmosphärendruck ist.

## Revendications

1. Procédé pour l'extraction de gibbsite à partir de bauxite comprenant le mélange de solides de bauxite avec une lessive d'extraction de soude caustique pour obtenir un premier écoulement d'amenée d'extraction, l'extraction de gibbsite dudit premier écoulement d'amenée d'extraction dans une première étape d'extraction à une température entre 100 et 180°C pour obtenir un premier écoulement de décharge d'extraction, la séparation du premier écoulement de décharge d'extraction en un premier écoulement de lessive et un premier écoulement de solides lors d'une première étape de séparation solide-liquide, la cristallisation du gibbsite du premier écoulement de lessive et l'addition d'une autre lessive d'extraction audit premier écoulement de solides pour obtenir un deuxième écoulement d'amenée d'extraction, l'extraction du gibbsite du deuxième écoulement d'amenée d'extraction lors d'une deuxième étape d'extraction pour obtenir un deuxième écoulement de décharge d'extraction, la séparation dudit deuxième écoulement de décharge d'extraction en un deuxième écoulement de lessive et un deuxième écoulement de solides lors d'une deuxième étape de séparation solide-liquide, **caractérisé en ce que** lesdites première et deuxième étapes de séparation solide-liquide sont exécutées à une température en dessous du point d'ébullition atmosphérique de la lessive d'extraction, ledit deuxième écoulement d'amenée d'extraction est chauffé pour la deuxième étape d'extraction, ladite deuxième étape d'extraction est à une température entre 120 et 160°C, et ledit deuxième écoulement de lessive de la deuxième séparation solide-liquide est soumis à un traitement ultérieur pour la cristallisation du gibbsite.

2. Procédé selon la revendication 1, où le deuxième écoulement de décharge d'extraction est refroidi par un échange de chaleur avec le deuxième écoulement d'amenée d'extraction.

3. Procédé selon l'une quelconque des revendications 1 à 2, où le refroidissement du deuxième écoulement de décharge d'extraction est effectué par un échange de chaleur sans le transfert de la substance.

4. Procédé selon l'une des revendications précédentes, où le deuxième écoulement de décharge d'extraction est amené en échange de chaleur à contre-courant continu avec le deuxième écoulement d'amenée d'extraction, où lesdits écoulements sont entièrement séparés l'un de l'autre.

5. Procédé selon l'une des revendications précédentes, où le deuxième écoulement d'amenée d'extraction est d'abord chauffé à un premier niveau de température en récupérant la chaleur du deuxième écoulement de décharge d'extraction et est chauffé ensuite à un deuxième niveau de température, par la chaleur d'une source de chaleur externe, où la différence entre lesdits niveaux de température est inférieure à 25°C, de préférence inférieure à 20°C, encore de préférence inférieure à 15°C et selon la plus grande préférence inférieure à 10°C.

6. Procédé selon l'une des revendications précédentes, où le deuxième écoulement de lessive est mélangé avec le premier écoulement de lessive.

7. Procédé selon l'une des revendications précédentes, où le deuxième écoulement de lessive est mélangé avec le premier écoulement de décharge d'extraction.

8. Procédé de production d'alumine par calcination de gibbsite, à une température entre 900 et 1200°C, où ladite calcination est effectuée sur le gibbsite, cristallisée à partir du deuxième écoulement de lessive produit selon un procédé selon l'une quelconque des revendications précédentes.

9. Appareil (1, 31, 61) pour extraire du gibbsite de bauxite comprenant une première cuve d'extraction (8, 38, 68), un premier mélangeur (3, 34, 65) ayant sa sortie reliée à l'entrée de ladite première cuve d'extraction, ledit mélangeur ayant une entrée pour la bauxite et pour la lessive d'extraction, un premier séparateur solide-liquide (10, 40, 70), ayant son entrée reliée à la sortie de ladite première cuve d'extraction, une deuxième cuve d'extraction (18, 48, 78), un deuxième mélangeur (14, 44, 74) ayant sa sortie reliée à l'entrée de ladite deuxième cuve d'extraction, ledit deuxième mélangeur ayant une entrée reliée à la sortie des solides dudit premier séparateur solide-liquide et à une conduite d'amenée pour plus de liqueur d'extraction (13, 45, 75), un deuxième séparateur solide-liquide (20, 50, 80) ayant son entrée reliée à la sortie de ladite deuxième cuve d'extraction, où un équipement de chauffage (15, 17; 45, 47; 75, 77) est installé entre la sortie dudit deuxième mélangeur (14, 44, 74) et l'entrée de la deuxième cuve d'extraction, l'appareil incluant un échangeur de chaleur (15, 45, 75) ayant un chemin d'écoulement entre la sortie de la deuxième cuve d'extraction et l'entrée dudit deuxième séparateur solide-liquide, l'autre chemin d'écoulement de l'échangeur de chaleur étant en amont de l'entrée de ladite deuxième cuve d'extraction, **caractérisé en ce que** ledit échangeur de chaleur est agencé pour échanger la chaleur entre ledit chemin d'écoulement précité et l'autre chemin d'écoulement d'une manière qui est continue, à contre-courant, sans transfert de substance.

10. Appareil selon la revendication 9, incluant un échangeur de chaleur ayant un chemin d'écoulement entre la sortie de ladite première cuve d'extraction et l'entrée dudit premier séparateur solide-liquide, l'autre chemin d'écoulement de l'échangeur de chaleur étant en amont de l'entrée de ladite première cuve d'extraction, où ledit échangeur de chaleur (5) est agencé pour échanger la chaleur entre ledit chemin d'écoulement et l'autre chemin d'écoulement d'une manière qui est continue, à contre-courant, sans transfert de substance.

11. Appareil selon la revendication 9 ou 10, où ledit échangeur de chaleur est un échangeur de chaleur en spirale.

12. Appareil selon l'une quelconque des revendications 9 à 11, où ledit premier séparateur solide-liquide est une cuve atmosphérique.

13. Appareil selon l'une quelconque des revendications 9 à 12, où ledit premier séparateur solide-liquide est un séparateur à deux étages, le premier étage étant conçu pour retirer les résidus grossiers et le deuxième étage étant conçu pour retirer les résidus fins, où le deuxième étage est une cuve atmosphérique.

14. Appareil selon l'une quelconque des revendications 9 à 13, où ledit deuxième séparateur solide-liquide est une cuve atmosphérique.

15. Appareil selon l'une quelconque des revendications 9 à 14, où ledit deuxième séparateur solide-liquide est un séparateur à deux étages, le premier étage étant conçu pour retirer les résidus grossiers et le deuxième étage étant conçu pour retirer les résidus fins, où le deuxième étage est une cuve atmosphérique.
